# EUROPEAN PATENT APPLICATION

(11) **EP 1 982 781 A1**
(43) Date of publication of application: **22.10.2008**
(21) Application number: 08250994.4
(22) Date of filing: 20.03.2008
(51) Int. Cl.: B22F 3/04, B22F 5/04, B23K 35/02, B23K 35/30

(54) **Powder-metallurgy braze preform and method of use**

(30) Priority: 17.04.2007 US 787489
(71) Applicant: United Technologies Corporation, Hartford, CT 06101 (US)
(72) Inventor: Huxol, Jason E., Mansfield, TX 76063 (US); Minor, Michael J., Arlingon, TX 76018 (US)
(74) Representative: Hall, Matthew Benjamin

(57) **Abstract**

A method of fabricating and using a braze preform, the method comprising cold pressing a powdered brazing material in a die, thereby forming a braze preform in the die. The braze preform can then be diffusion brazed to a damaged component to repair the component.

## Description

The present invention relates to brazing processes for restoring turbine engine components. In particular, the present invention relates to the fabrication and use of braze performs for restoring turbine engine components.

Turbine engine components are exposed to extreme temperatures and pressures during the course of operation. As such, these engine components typically employ high-strength alloys (e.g., superalloys) to preserve the integrity of the components. However, over time, exposed portions of the components are subject to wear, cracking, and other degradations, which can lead to decreases in operational efficiencies and damage to the components.

Due to economic factors, it is common practice in the aerospace industry to restore turbine engine components rather than replace them. Such restorations desirably restore damaged regions of the engine components to their original dimensions. One technique for restoring engine components involves the use of presintered braze preforms. Presintered braze preforms are preforms of powdered brazing alloys that are sintered into a plate of uniform thickness. Individual segments of the sintered brazing alloy are then stamped out of the sintered plate, and stacked to form a desired three-dimensional preform. The resulting preform is then brazed to the damaged region of the engine component to restore the engine component.

The fabrication of presintered braze preforms, however, requires significant time and resources, such as braze tape manufacturing, furnace sintering, and machining/cutting. Additionally, presintered braze performs are typically limited to two-dimensional shapes of a uniform thickness (i.e., sintered plates). Thus, multiple presintered braze preforms are required to build a three-dimensional restoration feature. Accordingly, there is a need for a braze perform that is easily fabricated and capable of forming three-dimensional shapes.

The present invention relates to a method of fabricating a braze preform, and a method of restoring a turbine engine component with the braze preform. The braze preform is fabricated by cold pressing a powdered brazing material within a die.
Certain preferred embodiments of the invention will now be described, by way of example only, with reference to the accompanying drawings, in which:

FIG. 1 is a flow diagram of a method for fabricating cold-pressed braze preforms; and

FIG. 2 is a flow diagram of a method for restoring a turbine engine component with a cold-pressed braze preform.

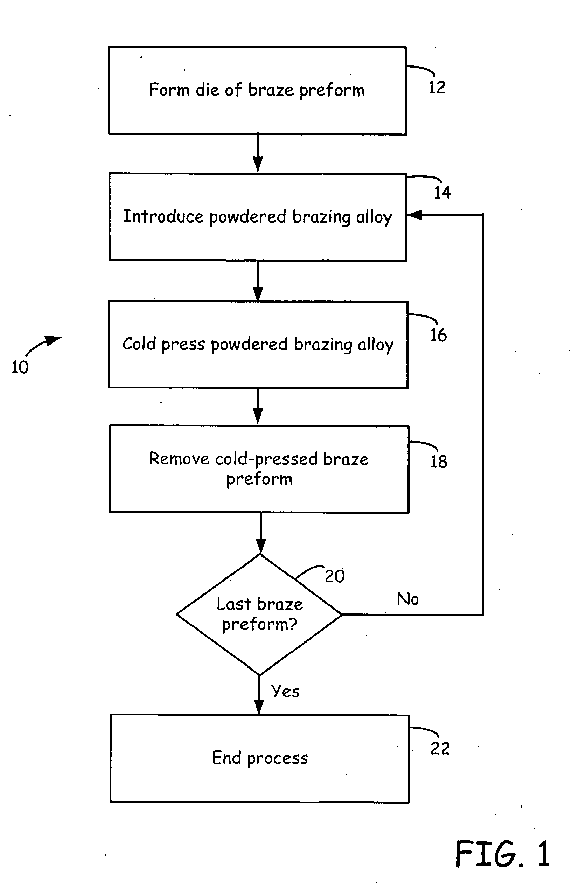

FIG. 1 is a flow diagram of method 10 for fabricating multiple cold-pressed braze preforms. Method 10 includes steps 12-22, and initially involves forming a die having a geometric shape of a desired braze preform (step 12). The die may be formed in a variety of manners from a variety of materials such that the die is capable of withstanding pressures applied during a cold pressing process. In one embodiment, which is suitable for use with industrial powdered metal presses, the die is desirably formed with a durable metal capable of withstanding the high pressures induced by the presses. In an alternative embodiment, which is suitable for use with isostatic cold pressing systems, the die is desirably formed with an elastomeric material (e.g., rubber) capable of receiving a uniform compression around the die.

The die allows braze preforms having complex, three-dimensional shapes to be fabricated (e.g., vanes and flanges). This omits the need to stamp out preform segments from a braze preform plate, and stack the segments to a desired shape, as required with sintered braze preforms. The desired geometric shape of the braze preforms may correspond to any shape used in a dimensional restoration process. As discussed below, a damaged region in an engine component may be machined to a predefined size that corresponds to the geometric shape of the braze preform. This allows the braze preform to be secured to the engine component at the damaged region. Accordingly, the die may be designed to define braze preforms having a geometric shape suitable for restoring damaged regions in engine components.

A powdered brazing material is then introduced (e.g., injected) into the die (step 14), where the powdered brazing material is desirably selected for compatibility with the engine component being restored. Examples of suitable materials for the powdered brazing materials include nickel, nickel-based alloys and superalloys, cobalt, cobalt-based alloys and superalloys, and combinations thereof; and may also include one or more additional materials such as carbon, titanium, chromium, niobium, hafnium, tantalum, molybdenum, tungsten, aluminum, and iron. Examples of particularly suitable alloys for the powdered brazing materials include nickel-boron-silicate brazing alloys that meet Aerospace Materials Specification (AMS) 4477, nickel-boron-silicate brazing alloys that meet AMS 4478, and combinations thereof. Suitable average particle sizes for the powdered brazing material include about two millimeters or less, with particularly suitable average particle sizes including about one millimeter or less. The amount of the powdered brazing material introduced into the die is desirably enough to provide a compressed braze preform having the desired geometric shape.

After being introduced into the die, the powdered brazing material is cold pressed in the die to form a braze preform (step 16), where the braze preform takes a shape defined by the die. The cold-pressing process may be performed in a variety of manners, such as with powdered metal presses and isostatic cold pressing systems. The term "cold" in cold pressing refers to non-elevated temperatures (e.g., room temperature), where the powdered brazing material is not heated by an external heat source before or during the pressing process. It is noted, however, the ambient conditions may vary depending on where the cold pressing process is performed. Accordingly, suitable temperatures for performing the cold pressing process include about 60°C (about 140°F) or less, with particularly suitable temperatures including about 30°C (about 90°F) or less. Such temperatures are substantially below the temperatures used in sintering processes.

The use of cold pressing is beneficial for reducing internal stresses in the resulting braze preform that may otherwise occur with heating and cooling steps. Additionally, cold pressing precludes the need to preheat the die and the powdered brazing material, thereby reducing the time required to form the braze preforms.

Examples of suitable pressures applied to the powdered brazing material within the die include at least about 100 megapascals, with particularly suitable pressures ranging from about 300 megapascals to about 700 megapascals, and with even more particularly suitable pressures ranging from about 500 megapascals to about 700 megapascals. Such pressures are suitable for fabricating braze preforms from the powdered brazing material that are capable of retaining their shapes for use in diffusion brazing processes (for securing the braze preforms to turbine engine components). As discussed below, the diffusion brazing processes further strengthen the braze preforms, thereby allowing the braze preforms to endure the extreme conditions that occur while operating a turbine engine.

Powdered metal presses use high-pressured pistons to compress the powdered brazing materials within the dies. Examples of suitable powdered metal presses for use with method 10 include those commercially available from Cincinnati, Inc., Cincinnati, OH. Suitable pressures and temperatures for operating the powdered metal presses include those discussed above.

Alternatively, in an isostatic cold press system, the die containing the powdered brazing material is initially placed in a processing chamber. A liquid medium (e.g., an oil-water mixture) is then pumped into the processing chamber, thereby pressurizing the die on all sides. As discussed above, in this embodiment, the die is desirably formed from an elastomeric material that the liquid medium can uniformly compress. Suitable pressures and temperatures for operating the isostatic cold press systems include those discussed above. Isostatic cold pressing is beneficial for forming braze preforms that have substantially uniform densities, close tolerances, and good machinabilities.

After the cold pressing process is complete the resulting cold-pressed braze preform is then removed from the die (step 18), and may undergo post-fabrication processing (e.g., cleaning steps). The resulting cold-pressed braze preform may then be secured to a turbine engine component with a diffusion brazing process. After the fabricated braze preform is removed from the die, steps 14-18 may then be repeated for fabricating additional cold-pressed braze preforms having the same geometric shape as defined by the die (step 20). This is continued until a desired number of cold-pressed braze preforms are fabricated (step 22). Because the cold pressing process of step 16 does not require a pre-heating step, steps 14-18 may be performed quickly (e.g., within a few minutes) compared to processes required for presintered braze preforms (e.g., several days). As a result, the throughput of cold-pressed braze preforms is high, thereby reducing production time.

In an alternative embodiment, method 10 may be performed with multiple dies. In this embodiment, step 12 of method 10 involves forming a plurality of dies, where each die has a geometric shape of one or more desired braze preforms. Steps 14-22 are then performed with each die to form the cold-pressed braze preforms. This embodiment is beneficial for increasing the throughput of cold-pressed braze preforms by allowing steps 14-22 to be performed in parallel.

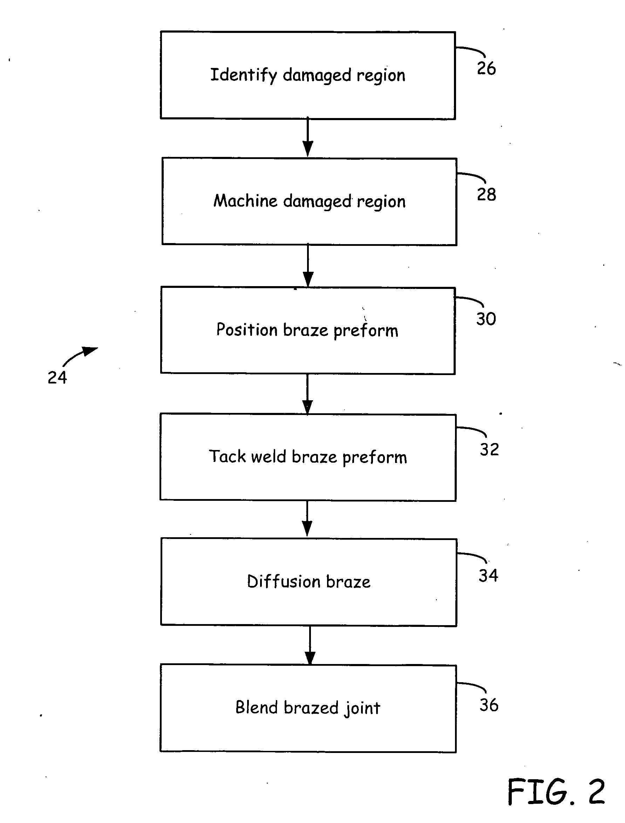

FIG. 2 is a flow diagram of method 24 for restoring a turbine engine component with a cold-pressed braze preform fabricated pursuant to method 10 (shown in FIG. 1). Method 24 includes steps 26-36, and initially involves identifying a damaged region in a surface of the engine component (step 26). The damaged region in the surface is then machined to a size that is compatible with the cold-pressed braze preform (step 28). Machining the damaged region may be performed in a variety of manners, such as cutting an indentation into the surface. Alternatively, machining may involve removing at least a portion of the damaged region, thereby allowing the cold-pressed braze preform to replace the damaged region.

The cold-pressed braze preform (fabricated pursuant to method 10) is then positioned over the surface, thereby covering the machined damaged region (step 30). The braze preform is then tack welded to the surface over the machined damaged region to secure the braze preform to the surface (step 32). The engine component containing the braze preform is then subjected to a diffusion brazing process (step 34). The diffusion brazing process is desirably performed in a stepwise heating and cooling process in a vacuum furnace, under a reduced pressure. Examples of suitable reduced pressures include about 1 Torr (7.5x10⁻³ Pa) or less, with particularly suitable pressures including about 0.001 Torr (7.5x10⁻⁶ Pa) or less. Alternatively, the heating cycles may be performed under partial pressure in an inert-gas atmosphere (e.g., argon gas).

The braze preform is fused to the surface of the engine component by heating the engine component and braze preform to a suitable temperature, and for a suitable duration, to interdiffuse at least a portion of the brazing material with the alloy of the surface of the engine component (e.g., nickel and/or cobalt superalloys). Suitable temperatures and durations for fusing the braze preform to the surface of the engine component generally depend on the brazing material and the alloy of engine component. Suitable temperatures include those that are less than the melting temperature of the alloy of the engine component, and that are also high enough to at least partially melt the braze preform.

In one embodiment, the engine component is heated using an initial, high-temperature, melting cycle, which is followed by a longer, lower-temperature, diffusion cycle. Examples of suitable temperatures for the melting cycle range from about 1200°C (about 2200°F) to about 1260°C (about 2300°F), and examples of suitable durations for the melting cycle range from about 5 minutes to about 30 minutes. Examples of suitable temperatures for the diffusion cycle range from about 1100°C (about 2000°F) to about 1200°C (about 2200°F), and examples of suitable durations for the diffusion cycle range from about 1 hour to about 20 hours.

After the diffusion cycle, the engine component is then cooled to room temperature. Suitable cooling rates depend on the alloy of the engine component and the braze preform, and may range from about 5°C/minute to about 50°C/minute. Upon cooling, the braze preform forms a brazed joint over the machined damaged region in the surface of the engine component.

In addition to forming a brazed joint, the diffusion brazing process of step 34 also sinters the braze preform, thereby increasing the strength of the braze preform. Metal parts formed by cold pressing typically require post-sintering steps to strengthen the parts. Otherwise, the metal parts typically exhibit low strengths. Method 24, however, combines the post-sintering step in the diffusion brazing process. This provides a durable part fused to the engine component, while omitting extra post-sintering steps.

After the diffusion brazing process, the brazed joint is then blended (i.e., smoothed down) to the original dimensions of the surface (step 36). The blending step may be performed in a variety of manners, such as machining (e.g., grinding), polishing, and combinations thereof. For a braze preform having a three-dimensional shape, the diffusion brazing process of step 34 typically deforms at least a portion of the three-dimensional shape. Accordingly, the blending in step 36 smoothes down the deformed three-dimensional shape to the original three-dimensional shape of the engine component (e.g., a flange).

The engine component may then undergo post-processing steps (e.g., cleaning) before being reassembled into a turbine engine. As discussed above, fabricating cold-pressed braze preforms increases the throughput of braze preforms, and reduces internal stresses in the resulting braze preforms. This provides quality braze preforms and reduces the time required to dimensionally restore turbine engine components.

Although the present invention has been described with reference to preferred embodiments, workers skilled in the art will recognize that changes may be made in form and detail without departing from scope of the invention.

## Claims

1. A method of fabricating a braze preform, the method omprising:
introducing a powdered brazing material into a die;
cold pressing the powdered brazing material in the die, thereby forming the braze
preform in the die; and
removing the braze preform from the die.

2. The method of claim 1, wherein the cold pressing is performed with a system selected from the group consisting of a powdered cold press and an isostatic cold press system.

3. The method of claim 1 or 2 wherein the powdered brazing material comprises a material selected from the group consisting of nickel, nickel-based alloys and superalloys, cobalt, cobalt-based alloys and superalloys, and combinations thereof.

4. The method of claim 1, 2 or 3, wherein the cold pressing is performed at a temperature of 60°C or less.

5. The method of claim 4, wherein the temperature that the cold pressing is performed at is 30°C or less.

6. The method of any preceding claim wherein the cold pressing comprises applying a pressure of at least 100 megapascals to the powdered brazing material.

7. The method of claim 6, wherein the pressure applied to the powdered brazing material ranges from 300 megapascals to about 700 megapascals.

8. The method of claim 7, wherein the pressure applied to the powdered brazing material ranges from 500 megapascals to about 700 megapascals.

9. The method of any preceding claim wherein the powdered brazing material comprises a material selected from the group consisting of nickel-boron-silicate brazing alloys that meet Aerospace Materials Specification 4477, nickel-boron-silicate brazing alloys that meet Aerospace Materials Specification 4478, and combinations thereof.

10. The method of claim 9, wherein the cold pressing is performed at a temperature of 30°C or less.

11. The method of claim 9, wherein the cold pressing comprises applying a pressure ranging from 500 megapascals to about 700 megapascals to the powdered brazing material with a powdered metal press.

12. A method of fabricating a plurality of braze preforms, the method omprising:
forming a die;
introducing a first amount of a powdered braze material into the die;
cold pressing the first amount of the powdered braze material in the die, thereby
forming one of the plurality of braze preforms in the die; and
removing the one of the plurality of braze preforms from the die.

13. The method of claim 12, further comprising:
introducing a second amount of the powdered braze material into the die;
cold pressing the second amount of the powdered braze material in the die, t hereby forming a second of the plurality of braze preforms in the die;
and removing the second of the plurality of braze preforms from the die.

14. The method of claim 12, wherein the die is a first die, and wherein the method further comprises:
forming at least a second die;
introducing a second amount of the powdered braze material into the second die;
cold pressing the second amount of the powdered braze material in the second die,
thereby forming a second of the plurality of braze preforms in the second die; and
removing the second of the plurality of braze preforms from the second die.

15. The method of claims 12 to 14, wherein the cold pressing is performed with a system selected from the group consisting of a powdered cold press and an isostatic cold press system.

16. The method of claims 12 to 15, wherein the powdered brazing material comprises a material selected from the group consisting of nickel, nickel-based alloys and superalloys, cobalt, cobalt-based alloys and superalloys, and combinations thereof.

17. The method of claims 12 to 16, wherein the cold pressing comprises applying a pressure of at least 100 megapascals to the powdered brazing material.

18. The method of claim 17, wherein the pressure applied to the powdered brazing material ranges from 300 megapascals to 700 megapascals.

19. The method of claim 18, wherein the pressure applyied to the powdered brazing material ranges from 500 megapascals to 700 megapascals.

20. A method of restoring a turbine engine component, the method comprising:
cold pressing a powdered brazing material in a die to form a braze preform;
positioning the braze preform over a damaged region in a surface of the turbine engine component; and
diffusion brazing the braze preform to the surface at the damaged region to form a brazed joint.

21. The method of claim 20, wherein the cold pressing is performed with a system selected from the group consisting of a powdered cold press and an isostatic cold press system.

22. The method of claim 20 or 21, wherein the powdered brazing material comprises a material selected from the group consisting of nickel, nickel-based alloys and superalloys, cobalt, cobalt-based alloys and superalloys, and combinations thereof.

23. The method of claims 20 to 22, further comprising machining the surface at the damaged region prior to positioning the braze preform over the damaged region.

24. The method of claims 20 to 23, further comprising blending the brazed joint.
